# EUROPEAN PATENT APPLICATION

(11) **EP 4 718 245 A1**
(43) Date of publication of application: **01.04.2026**
(21) Application number: 25183449.5
(22) Date of filing: 17.06.2025
(51) Int. Cl.: G06F 9/4401, G06F 9/445, G06F 9/54

(54) **CONTROL SYSTEM AND METHOD OF BASIC INPUT/OUTPUT SYSTEM AND EXPANSION CARD**

(30) Priority: 12.12.2024 TW 113148314
(71) Applicant: Giga-Byte Technology Co., Ltd., New Taipei City (TW)
(72) Inventor: Wu, Tsung Ta, New Taipei City (TW); Hsu, Shu-Yu, New Taipei City (TW); Lin, Tai Li, New Taipei City (TW)
(74) Representative: Müller Schupfner & Partner Patent- und Rechtsanwaltspartnerschaft mbB (Muc)

(57) **Abstract**

The present disclosure provides a control system (1,2) and method of a basic input/output system (111,211) and expansion card (3,4). The control method of the basic input/output system (111,211), performed by a processing device (13,23), includes: obtaining (S101) an operation command corresponding to the basic input/output system (111,211); performing (S105) conversion on the operation command according to a command format of the basic input/output system (111,211) to generate a target command when determining the operation command corresponds to a target parameter among a plurality of accessible parameters of the basic input/output system; and providing (S107) the target command to the basic input/output system (111,211).

## Description

### BACKGROUND

### 1. Technical Field

This disclosure relates to a control system and method of basic input/output system and expansion card.

### 2. Related Art

In current technologies, engineers working on the basic input/output system (BIOS) face several major challenges when modifying hardware settings during the motherboard's boot-up phase. First, the large and complex nature of the BIOS code requires engineers to have an in-depth understanding of architecture and module details of the BIOS code in order to accurately identify the segments that need modification, a process that is both time-consuming and labor-intensive. Additionally, hardware-related configuration code is often scattered across different modules, making it even more difficult and time-consuming to locate the correct segments for modification. Furthermore, the BIOS compilation process is significantly more time-consuming compared to regular application software, as a full compilation is typically required after each change, which prolongs the development cycle and reduces overall efficiency.

Moreover, testing and debugging pose another significant challenge. Engineers must flash the modified BIOS onto a test motherboard to verify the functionality of motherboard. Any minor mistake can cause the motherboard to fail to boot or lead to unknown errors. Debugging such issues is both complex and time-consuming, often requiring multiple rounds of revisions and testing to ensure system stability.

### SUMMARY

Accordingly, this disclosure provides a control system and method of basic input/output system and expansion card.

According to one or more embodiment of this disclosure, a control method of a basic input/output system, performed by a processing device, includes: obtaining an operation command corresponding to the basic input/output system; performing conversion on the operation command according to a command format of the basic input/output system to generate a target command when determining the operation command corresponds to a target parameter among a plurality of accessible parameters of the basic input/output system; and providing the target command to the basic input/output system.

According to one or more embodiment of this disclosure, a control system of a basic input/output system includes: a motherboard, a shared memory and a processing device. The motherboard includes the basic input/output system. The shared memory is connected to the motherboard, and the shared memory is configured to store a plurality of accessible parameters of the basic input/output system. The processing device is connected to the motherboard and the shared memory, and the processing device is configured to obtain an operation command corresponding to the basic input/output system, perform conversion on the operation command according to a command format of the basic input/output system to generate a target command when determining the operation command corresponds to a target parameter among the plurality of accessible parameters of the basic input/output system, provide the target command to the basic input/output system.

According to one or more embodiment of this disclosure, an expansion card, connected to a basic input/output system, includes: a command receiving interface and a command transmission interface. The command receiving interface is configured to receive an operation command corresponding to the basic input/output system, and perform conversion on the operation command according to a command format of the basic input/output system to generate a target command when determining the operation command corresponds to a target parameter among a plurality of accessible parameters of the basic input/output system. The command transmission interface is connected to the command receiving interface, and configured to provide the target command to the basic input/output system.

In view of the above description, the control system and method of BIOS according to one or more embodiments of the present disclosure may allow BIOS engineers to quickly read or adjust BIOS settings and/or hardware configurations without the need to recompile the entire BIOS code, thereby enhancing development efficiency. Furthermore, by converting operation command based on the command format of the BIOS, consistent command format and accurate data transmission may be ensured, enabling the BIOS to flexibly perform hardware configuration and control operations.

### BRIEF DESCRIPTION OF THE DRAWINGS

The present disclosure will become more fully understood from the detailed description given hereinbelow and the accompanying drawings which are given by way of illustration only and thus are not limitative of the present disclosure and wherein:
FIG. 1 is a block diagram illustrating a control system of basic input/output system according to an embodiment of the present disclosure;
FIG. 2 is a flowchart illustrating a control method of basic input/output system according to an embodiment of the present disclosure;
FIG. 3 is a block diagram illustrating a control system of basic input/output system according to another embodiment of the present disclosure;
FIG. 4 is a block diagram illustrating an expansion card according to an embodiment of the present disclosure; and
FIG. 5 is a block diagram illustrating an expansion card according to another embodiment of the present disclosure.

### DETAILED DESCRIPTION

In the following detailed description, for purposes of explanation, numerous specific details are set forth in order to provide a thorough understanding of the disclosed embodiments. According to the description, claims and the drawings disclosed in the specification, one skilled in the art may easily understand the concepts and features of the present invention. The following embodiments further illustrate various aspects of the present invention, but are not meant to limit the scope of the present invention.

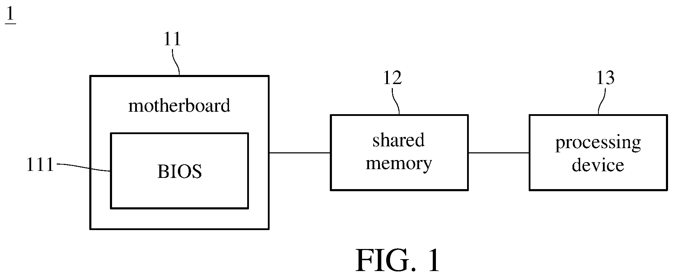

Please refer to FIG. 1, wherein FIG. 1 is a block diagram illustrating a control system of basic input/output system according to an embodiment of the present disclosure. As shown in FIG. 1, the control system 1 includes a motherboard 11, a shared memory 12 and a processing device 13. The motherboard 11 is connected to the shared memory 12, and the shared memory 12 is connected to the processing device 13. The processing device 13 may be connected to the motherboard 11 through the shared memory 12. The motherboard 11 includes a basic input/output system (BIOS) 111.

The motherboard 11 may be configured to execute an operation command input by the user, and the operation command may be configured to modify hardware settings of the BIOS 111, read data of the BIOS 111, etc. Specifically, the operation command may be configured to modify the hardware settings of the boot-up process of the BIOS 111, the present disclosure is not limited thereto.

The shared memory 12 is configured to store accessible parameters of the BIOS 111. The accessible parameters may be parameters that the user has been granted with access prior to said modification or reading. The accessible parameters may correspond to a plurality of pieces of identification information, respectively. The operation command may include the identification information of the accessible parameters. The accessible parameters may include more than one of setting parameter of the basic input/output register, setting parameter of other system registers, setting parameter of inter-integrated circuit (I2C) communication, setting parameter of system management bus (SMBus), setting parameter of the memory, setting parameter of memory-mapped input/output (I/O) (MMIO), setting parameter of variables of the BIOS 111, setting parameter of model-specific register (MSR) of the central processing unit, setting parameter of super I/O, setting parameter of pulse-width modulation, setting parameter of general I/O and addresses of the accessible storage blocks etc., the present disclosure is not limited thereto. The shared memory 12 may include one or more memories, the memory may be a non-volatile memory (NVM) and a random access memory (RAM), such as read-only memory (ROM), a flash memory and/or a non-volatile random access memory (NVRAM), a static random-access memory (SRAM) and a dynamic random-access memory (DRAM), etc.

The processing device 13 is configured to obtain the operation command corresponding to the BIOS 111, and provide the target command corresponding to the operation command to the BIOS 111 through the shared memory 12. The processing device 13 may execute a real-time operating system (RTOS) to process commands with ultra-low latency, thereby ensuring the immediacy of hardware configuration changes. The processing device 13 may receive the operation command through a user interface, wherein the user interface may be a web browser or web application. The processing device 13 may have a web service interface, and the operation command may be output to the web service interface of the processing device 13 through hypertext transfer protocol (HTTP) or hypertext transfer protocol secure (HTTPS). The operation command is transmitted to the BIOS 111 through an application interface. The application program interface is, for example, a representational state transfer (RESTful) application interface. The steps performed by the processing device 13 described below may be executed through RTOS. The processing device 13 may include one or more processors, and the processor is, for example, a central processing unit (CPU), a graphics processing unit (GPU), a microcontroller (MCU), a programmable logic controller (PLC), or other processors with signal processing capabilities.

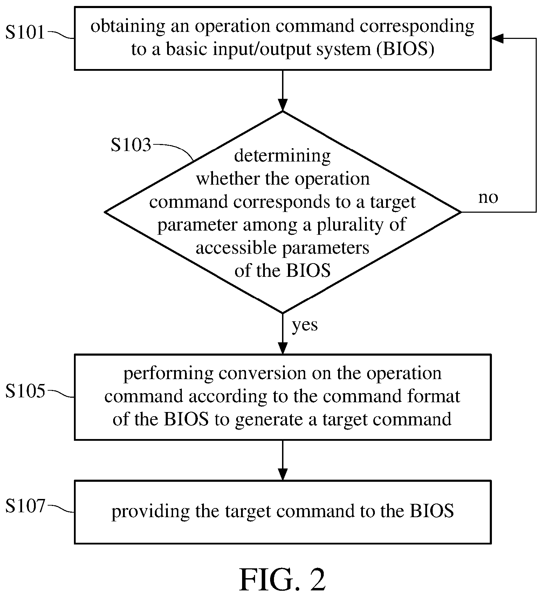

Please refer to FIG. 1 and FIG. 2, wherein FIG. 2 is a flowchart illustrating a control method of basic input/output system according to an embodiment of the present disclosure. As shown in FIG. 2, the control method includes: step S101: obtaining an operation command corresponding to a basic input/output system; step S103: determining whether the operation command corresponds to a target parameter among a plurality of accessible parameters of the BIOS; when the determination result of step S103 is "no", performing step S101 again; when the determination result of step S103 is "yes", performing step S105: performing conversion on the operation command according to the command format of the BIOS to generate a target command; and step S107: providing the target command to the BIOS. It should be noted that the control method may also end when the determination result of step S103 is "no", the present disclosure is not limited thereto.

In step S101, the processing device 13 obtains the operation command for the BIOS 111. The operation command may be transmitted to the processing device 13 by the user through the user interface.

In step S103, the processing device 13 determines whether the operation command indicates any one of the accessible parameters. The processing device 13 may perform step S101 again when the processing device 13 determines that the operation command does not indicate any one of the accessible parameters.

In step S105, the processing device 13 converts the operation command into the target command according to the command format of the BIOS 111 when the processing device 13 determines that the operation command indicates one of the accessible parameters. The accessible parameter indicated by the operation command is referred to as "target parameter" below. Further, the command format may be a format of JavaScript object notion (JSON). The target command may include the operation command converted into JSON format. The processing device 13 may further convert the target command into a character string of the command format. The character string of the command format may include the identification information of the target parameter, the operation type corresponding to the operation command (for example, reading operation), the address corresponding to the operation type (for example, address of the to-be-read block), data length corresponding to the operation type (for example, data length of the to-be-read data) and operation status corresponding to the operation command (for example, the operation status of "to be processed"). The character string of the command format described herein is an example, the present disclosure is not limited thereto.

In step S107, the processing device 13 provides the target command to the BIOS 111. For example, the processing device 13 may provide the target command to the BIOS 111 through the shared memory 12. The processing device 13 may also output the target command to the BIOS 111 directly when the processing device 13 and the motherboard 11 are in direct connection.

The BIOS 111 may read the character string of the command format described above from the shared memory 12, and parse the character string of the command format to determine the operation type and the corresponding address, thereby performing the reading operation.

The control system and method of BIOS according to one or more embodiments of the present disclosure may allow BIOS engineers to quickly read or adjust BIOS settings and/or hardware configurations without the need to recompile the entire BIOS code, thereby enhancing development efficiency. Furthermore, by converting operation command based on the command format of the BIOS, consistent command format and accurate data transmission may be ensured, enabling the BIOS to flexibly perform hardware configuration and control operations.

In an embodiment of step S107, the processing device 13 may store the target command (or the character string of the command format described above) into the shared memory 12, and the BIOS 111 may read the target command from the shared memory 12. After storing the target command into the shared memory 12, the processing device 13 may further read a command execution result from the shared memory 12, wherein the command execution result is generated by the BIOS 111. In other words, after the BIOS 111 performs the operation corresponding to the target command, the BIOS 111 may store the command execution result corresponding to the target command into the shared memory 12. In this embodiment, the motherboard 11 and the shared memory 12 may be connected to each other in a wired manner. For example, the motherboard 11 and the shared memory 12 may each has a peripheral component interconnect express (PCIe) interface, and the BIOS 111 may read the target command stored by the shared memory 12 through the PCIe interface, and the BIOS 111 may store the command execution result into the shared memory 12 through the PCIe interface.

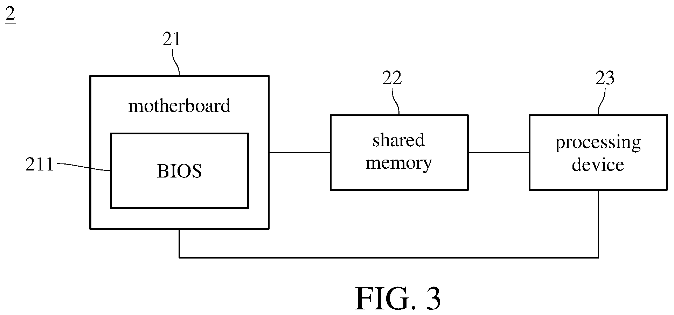

Please refer to FIG. 3, wherein FIG. 3 is a block diagram illustrating a control system of basic input/output system according to another embodiment of the present disclosure. As shown in FIG. 3, the control system 2 includes a motherboard 21, a shared memory 22 and a processing device 23. The motherboard 21 is connected to the shared memory 22 and is directly connected to the processing device 23, and the shared memory 22 is connected to the processing device 23. The motherboard 21 includes a BIOS 211. The implementation of the motherboard 21, the shared memory 22 and the processing device 23 may be the same as that of the motherboard 11, the shared memory 12 and the processing device 13 of FIG. 1, respectively, their descriptions are not repeated herein.

In another embodiment of step S107, the processing device 23 may output the target command (or the character string of the command format described above) to the BIOS 211 directly through the application interface. After outputting the target command to the BIOS 211, the processing device 23 may further receive the command execution result directly from the BIOS 211 through application program interface. In other words, the BIOS 211 may directly output the command execution result corresponding to the target command to the processing device 23 after executing the target command. In the present embodiment, the motherboard 21 and the processing device 23 may be connected to each other through wired or wireless manner. For example, the motherboard 21 and the processing device 23 may each has a network interface, the processing device 23 may directly output the target command to the BIOS 211 through the network interface, and the processing device 23 may receive the command execution result from the BIOS 211 through the network interface. The network interface may include at least one of a physical network cable and a wireless network interface. The network interface is, for example, a local area network (LAN) channel and/or Wi-Fi channel, and the network interface of the motherboard 21 and the network interface of the processing device 23 may be connected to each other through an Internet router and/or an Intranet router.

More specifically, the BIOS 211 may parse the character string of the command format to determine the operation type and the corresponding address, and then perform the reading operation after receiving the character string of the command format of the application program interface from RTOS.

In the embodiment of FIG. 3, the processing device 23 may further store the target command into the shared memory 22. Further, the processing device 23 may store the command execution result into the shared memory 22.

Through the embodiment of the PCIe interface and the network interface, the user may be allowed to select a suitable way according to application scenario and requirement to perform the modification and control of BIOS setting. Therefore, a wider range of use case may be accommodated.

In addition, corresponding to the example of the character string of the command format described above, the command execution result may also be implemented in the form of the character string of the command format. The command execution result may include the identification information of the target parameter, the operation type (for example, reading operation), the address corresponding to the operation type (for example, address of the to-be-read block), data length corresponding to the operation type (for example, data length of the read data), the read data and operation status corresponding to the operation command (for example, the operation status of "finished").

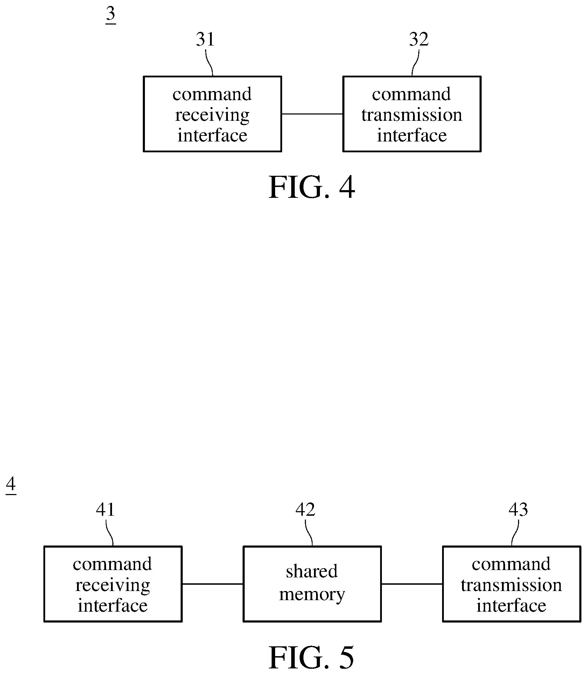

Please refer to FIG. 4, wherein FIG. 4 is a block diagram illustrating an expansion card according to an embodiment of the present disclosure. As shown in FIG. 4, the expansion card 3 includes a command receiving interface 31 and a command transmission interface 32. The command receiving interface 31 is electrically connected to or in communication connection with the command transmission interface 32. The expansion card 3 may be an expansion card configured to be plugged to the motherboard (for example, the motherboard 11 shown in FIG. 1), and the command transmission interface 32 may be directly connected to the motherboard.

The command receiving interface 31 is configured to receive the operation command corresponding to the BIOS, and convert the operation command into the target command according to the command format of the BIOS when determining that the operation command corresponds to the target parameter among the accessible parameters of the BIOS. The command receiving interface 31 may include a hardware port of a web service interface. The command transmission interface 32 is configured to provide the target command or the character string of the command format described above to the BIOS. The command receiving interface 31 and the command transmission interface 32 may be implemented with the processing device of one or more embodiments described above.

The command receiving interface 31 may directly output the target command to the BIOS through the command transmission interface 32. Further, the command transmission interface 32 may be further configured to output the command execution result coming from the BIOS to the command receiving interface 31 after outputting the target command to the BIOS, thereby presenting the command execution result on the user interface through the command receiving interface 31. In the present embodiment, the command transmission interface 32 may include a network interface, that is, the expansion card 3 is connected to the motherboard through the network interface.

In addition, in the embodiment where the expansion card 3 is connected to the motherboard through the network interface, the expansion card 3 may further include the shared memory of one or more embodiments described above. The shared memory is connected to the command receiving interface 31 and the command transmission interface 32. The command receiving interface 31 may be further configured to store the target command into the shared memory, and the command transmission interface 32 may be further configured to store the command execution result from the BIOS into the shared memory.

Please refer to FIG. 5, wherein FIG. 5 is a block diagram illustrating an expansion card according to another embodiment of the present disclosure. As shown in FIG. 5, the expansion card 4 includes a command receiving interface 41, a shared memory 42 and a command transmission interface 43. The command receiving interface 41 is electrically connected to or in communication connection with the shared memory 42, and the shared memory 42 is electrically connected to or in communication connection with the command transmission interface 43. The expansion card 4 may be an expansion card configured to be plugged to the motherboard (for example, the motherboard 11 shown in FIG. 1).

The command receiving interface 41 is configured to receive the operation command corresponding to the BIOS, and convert the operation command into the target command according to the command format of the BIOS when determining that the operation command corresponds to the target parameter among the accessible parameters. The command receiving interface 41 may store the target command into the shared memory 42. The command transmission interface 43 is configured to connect the BIOS to provide the target command or the character string of the command format described above to the BIOS through the shared memory 42. The command receiving interface 41 and the command transmission interface 43 may be implemented with the processing device of one or more embodiments described above.

The BIOS may read the target command from the shared memory 42 through the command transmission interface 43. The command transmission interface 43 may be further configured to store the command execution result coming from the BIOS into the shared memory 42 after outputting the target command to the BIOS. In this embodiment, the command transmission interface 43 may include an PCIe interface, that is, the expansion card 4 is directly connected to the motherboard through the PCIe interface.

In one or more embodiments described above, the processing device may further activate the motherboard after outputting the target command to the shared memory or the BIOS. The motherboard may read/receive the target command after being activated. Further, the processing device may shut down the motherboard when the command execution result shows abnormal result.

In view of the above description, the control system and method of BIOS according to one or more embodiments of the present disclosure may allow BIOS engineers to quickly read or adjust BIOS settings and/or hardware configurations without the need to recompile the entire BIOS code, thereby enhancing development efficiency. Furthermore, by converting operation command based on the command format of the BIOS, consistent command format and accurate data transmission may be ensured, enabling the BIOS to flexibly perform hardware configuration and control operations. Through the embodiment of the PCIe interface and the network interface, the user may be allowed to select a suitable way according to application scenario and requirement to perform the modification and control of BIOS setting. Therefore, a wider range of use case may be accommodated.

## Claims

1. A control method of a basic input/output system (111,211), performed by a processing device (13,23), comprising:
obtaining (S101) an operation command corresponding to the basic input/output system (111,211);
performing (S105) conversion on the operation command according to a command format of the basic input/output system (111,211) to generate a target command when determining the operation command corresponds to a target parameter among a plurality of accessible parameters of the basic input/output system (111,211); and
providing (S107) the target command to the basic input/output system (111,211).

2. The control method of the basic input/output system (111,211) according to claim 1, wherein providing (S107) the target command to the basic input/output system comprises:
storing the target command into a shared memory (12,22),
wherein the basic input/output system (111,211) reads the target command from the shared memory (12,22).

3. The control method of the basic input/output system (111,211) according to claim 2, further comprising:
reading a command execution result from the shared memory (12,22) after storing the target command into the shared memory, wherein the command execution result is generated by the basic input/output system (111,211).

4. The control method of the basic input/output system (111,211) according to claim 1, wherein providing (S107) the target command to the basic input/output system (111,211) comprises:
outputting the target command to the basic input/output system (111,211) through a network interface.

5. The control method of the basic input/output system (111,211) according to claim 4, further comprising:
receiving a command execution result generated by the basic input/output system (111,211) through the network interface after providing the target command to the basic input/output system (111,211).

6. The control method of the basic input/output system (111,211) according to claim 4, further comprising:
storing the target command into a shared memory (12,22).

7. A control system (1,2) of a basic input/output system (111,211), comprising:
a motherboard (11,21) comprising the basic input/output system (111,211);
a shared memory (12,22) connected to the motherboard (11,21), the shared memory configured to store a plurality of accessible parameters of the basic input/output system (111,211); and
a processing device (13,23) connected to the motherboard (11,21) and the shared memory (12,22), the processing device (13,23) configured to obtain an operation command corresponding to the basic input/output system (111,211), perform conversion on the operation command according to a command format of the basic input/output system (111,211) to generate a target command when determining the operation command corresponds to a target parameter among the plurality of accessible parameters of the basic input/output system (111,211), provide the target command to the basic input/output system (111,211).

8. The control system (1,2) of the basic input/output system (111,211) according to claim 7, wherein the processing device (13,23) is configured to store the target command into the shared memory (12,22).

9. The control system (1,2) of the basic input/output system (111,211) according to claim 8, wherein the processing device (13,23) is further configured to read a command execution result from the shared memory (12,22) after storing the target command into the shared memory (12,22), and wherein the command execution result is generated by the basic input/output system (111,211).

10. The control system (1,2) of the basic input/output system (111,211) according to claim 7, wherein the processing device (13,23) is connected to the motherboard (11,21) through a network interface, and the processing device (13,23) is configured to output the target command to the basic input/output system (111,211) through the network interface.

11. The control system (1,2) of the basic input/output system (111,211) according to claim 10, wherein the processing device (13,23) is further configured to receive a command execution result generated by the basic input/output system (111,211) through the network interface after providing the target command to the basic input/output system (111,211).

12. The control system (1,2) of the basic input/output system (111,211) according to claim 10, wherein the processing device (13,23) is further configured to store the target command into a shared memory (12,22).

13. An expansion card (3,4), connected to a basic input/output system, comprising:
a command receiving interface (31,41) configured to receive an operation command corresponding to the basic input/output system, and perform conversion on the operation command according to a command format of the basic input/output system to generate a target command when determining the operation command corresponds to a target parameter among a plurality of accessible parameters of the basic input/output system; and
a command transmission interface (32,43) connected to the command receiving interface (31,41), and configured to provide the target command to the basic input/output system.

14. The expansion card (3,4) according to claim 13, further comprising:
a shared memory (42) connected to the command receiving interface (31,41) and the command transmission interface (32,43), and the command receiving interface (31,41) storing the target command into the shared memory (42), wherein the basic input/output system reads the target command from the shared memory (42) through the command transmission interface (32,43).

15. The expansion card (3,4) according to claim 14, wherein the command transmission interface (32,43) is further configured to store a command execution result generated by the basic input/output system into the shared memory (42) after providing the target command to the basic input/output system.

16. The expansion card (3,4) according to claim 15, wherein the command transmission interface (32,43) is peripheral component interconnect express interface.

17. The expansion card (3,4) according to claim 13, wherein the command transmission interface (32,43) is a network interface.

18. The expansion card (3,4) according to claim 17, wherein the command transmission interface (32,43) is further configured to output a command execution result generated by the basic input/output system to the command receiving interface after providing the target command to the basic input/output system.

19. The expansion card (3,4) according to claim 17, further comprising:
a shared memory (42) connected to the command receiving interface (31,41), wherein the command receiving interface (31,41) is further configured to store the target command into the shared memory (42).

## Amended claims

### Amended claims in accordance with Rule 137(2) EPC.

1. A control method of a basic input/output system (111,211), performed by an expansion card (13,23) plugged to the motherboard (11,21) comprising the basic input/output system (111,211), comprising:
obtaining (S101) an operation command corresponding to the basic input/output system (111,211);
performing (S105) conversion on the operation command according to a command format of the basic input/output system (111,211) to generate a target command when determining the operation command corresponds to a target parameter among a plurality of accessible parameters of the basic input/output system (111,211); and
providing (S107) the target command to the basic input/output system (111,211).

2. The control method of the basic input/output system (111,211) according to claim 1, wherein providing (S107) the target command to the basic input/output system comprises:
storing the target command into a shared memory (12,22),
wherein the basic input/output system (111,211) reads the target command from the shared memory (12,22).

3. The control method of the basic input/output system (111,211) according to claim 2, further comprising:
reading a command execution result from the shared memory (12,22) after storing the target command into the shared memory, wherein the command execution result is generated by the basic input/output system (111,211).

4. A control system (1,2) of a basic input/output system (111,211), comprising:
a motherboard (11,21) comprising the basic input/output system (111,211);
a shared memory (12,22) connected to the motherboard (11,21), the shared memory configured to store a plurality of accessible parameters of the basic input/output system (111,211); and
an expansion card (13,23) plugged to the motherboard (11,21) and connected to the shared memory (12,22), the expansion card (13,23) configured to obtain an operation command corresponding to the basic input/output system (111,211), perform conversion on the operation command according to a command format of the basic input/output system (111,211) to generate a target command when determining the operation command corresponds to a target parameter among the plurality of accessible parameters of the basic input/output system (111,211), provide the target command to the basic input/output system (111,211).

5. The control system (1,2) of the basic input/output system (111,211) according to claim 4, wherein the expansion card (13,23) is configured to store the target command into the shared memory (12,22).

6. The control system (1,2) of the basic input/output system (111,211) according to claim 5, wherein the expansion card (13,23) is further configured to read a command execution result from the shared memory (12,22) after storing the target command into the shared memory (12,22), and wherein the command execution result is generated by the basic input/output system (111,211).

7. An expansion card (3,4), plugged to a motherboard (11,21) comprising a basic input/output system (111,211), comprising:
a command receiving interface (31,41) configured to receive an operation command corresponding to the basic input/output system, and perform conversion on the operation command according to a command format of the basic input/output system to generate a target command when determining the operation command corresponds to a target parameter among a plurality of accessible parameters of the basic input/output system; and
a command transmission interface (32,43) connected to the command receiving interface (31,41), and configured to provide the target command to the basic input/output system.

8. The expansion card (3,4) according to claim 7, further comprising:
a shared memory (42) connected to the command receiving interface (31,41) and the command transmission interface (32,43), and the command receiving interface (31,41) storing the target command into the shared memory (42), wherein the basic input/output system reads the target command from the shared memory (42) through the command transmission interface (32,43).

9. The expansion card (3,4) according to claim 8, wherein the command transmission interface (32,43) is further configured to store a command execution result generated by the basic input/output system into the shared memory (42) after providing the target command to the basic input/output system.

10. The expansion card (3,4) according to claim 9, wherein the command transmission interface (32,43) is peripheral component interconnect express interface.
